# FASCICULE DE BREVET EUROPEEN

(11) **EP 1 659 038 B1**
(45) Date de publication et mention de la délivrance du brevet: **29.07.2015**
(21) Numéro de dépôt: 05292433.9
(22) Date de dépôt: 16.11.2005
(51) Int. Cl.: B60R 21/34

(54) **Systèmes d'absorption mécaniques pour articulation active de capot**
Dämpfungssystem für aktive Motorhaubenscharniere.
Mechanical absorbing systems for active hood hinges.

(30) Priorité: 22.11.2004 FR 0412343
(43) Date de publication de la demande: 24.05.2006
(73) Titulaire: HERAKLES, 33185 Le Haillan (FR)
(72) Inventeur: Borg, Evrard, 33127 Martignas sur Jalle (FR); Laspesa, Eric, 83140 Six Fours (FR); Nadeau, Jean-Paul, 83190 Ollioules (FR)
(74) Mandataire: Le Roux, Martine

(56) Documents cités:
- EP-A- 1 090 819
- DE-A1- 10 108 882
- FR-A- 2 848 947
- PATENT ABSTRACTS OF JAPAN vol. 2003, no. 12, 5 décembre 2003 (2003-12-05) & JP 2004 308785 A (NHK SPRING CO LTD), 4 novembre 2004 (2004-11-04)
- PATENT ABSTRACTS OF JAPAN vol. 1998, no. 12, 31 octobre 1998 (1998-10-31) & JP 10 194158 A (NISSAN MOTOR CO LTD), 28 juillet 1998 (1998-07-28)

## Description

Le domaine technique de l'invention est celui des dispositifs utilisés dans le domaine de la sécurité automobile pour protéger un piéton en cas de choc frontal entre ledit piéton et un véhicule automobile.

Lorsqu'un piéton est percuté par l'avant d'un véhicule automobile, il est courant que la tête du piéton vienne en contact direct avec le capot avant du véhicule. Le choc de la tête sur le capot provoque des déformations du capot. Ces déformations se produisent souvent jusqu'à ce que le capot entre en contact avec le bloc moteur et toutes pièces rigides telles que puits d'amortisseur, mécanisme d'essuie-glace, etc.... Le mouvement de la tête du piéton est alors brusquement stoppé par le capot en contact avec le bloc moteur et subit donc une violente décélération pouvant causer de graves blessures au piéton.

Il est connu dans l'art antérieur des dispositifs permettant, lors d'un choc entre un piéton et un véhicule automobile, de soulever le capot du véhicule d'une certaine hauteur de manière à éviter que les membres du piéton et notamment sa tête soient stoppés, lors du choc contre, le capot, par le bloc moteur situé juste au-dessous du capot. Dans les dispositifs de l'art antérieur, le soulèvement du capot est effectué au niveau de l'arrière du capot, c'est-à-dire du côté parebrise, qui est opposé à celui utilisé pour l'ouverture ou la fermeture du capot lors de son fonctionnement normal, le capot restant fixé à l'avant du véhicule automobile.

Le brevet FR 2 848 947 se rapporte à un dispositif de sécurité pour soulever un capot d'un véhicule automobile en cas de collision, ce dispositif étant situé sous ledit capot et comprenant un mécanisme de soulèvement dudit capot et un vérin, ledit capot comprenant une structure permettant, en fonctionnement normal, son ouverture ou sa fermeture, autour d'un axe dit de rotation.

La principale caractéristique de ce dispositif est que le mécanisme de soulèvement subi d'abord une phase de déverrouillage en effectuant un premier déplacement en translation.

La principale caractéristique de ce dispositif est qu'il subit une phase de déverrouillage par déplacement en translation, puis une phase de déploiement par déplacement rotatif. Le dispositif de sécurité prévoit également une phase ultime d'amortissement permettant d'accompagner le choc du piéton sur le capot de façon à amoindrir l'impact dudit choc. Il est spécifiquement décrit un dispositif de freinage avec billes initialement logées dans le piston pour la mise en oeuvre de ladite phase ultime d'amortissement.

Le dispositif de sécurité selon l'invention présente un dispositif d'amortissement dont les qualités sont adaptées aux exigences liées à l'exiguïté des véhicules automobiles et à leur faible coût, à savoir, un encombrement réduit, une simplicité de conception et une fiabilité accrue. La simplicité de conception signifie que le dispositif d'amortissement ne doit pas entraîner de rajout de pièces nécessitant un usinage complexe et coûteux.

La présente invention a pour objet un dispositif de sécurité pour soulever le capot d'un véhicule automobile en cas de collision avec un piéton, comprenant un vérin pyrotechnique muni d'un piston de poussée - ledit vérin pyrotechnique possédant un corps cylindrique creux dans lequel est placé ledit piston - solidaire d'un mécanisme de soulèvement du capot et apte à déployer ledit mécanisme qui est lui-même solidaire dudit capot, un dispositif de blocage destiné à bloquer ledit vérin dans une position donnée, et un dispositif d'amortissement, situé dans ledit vérin pyrotechnique, mis en oeuvre lors d'un choc piéton sur le capot qui s'est soulevé, de manière à ce que l'ensemble constitué par le capot, le mécanisme de soulèvement et le piston puisse se déplacer sous l'impact du choc tout en étant freiné. De façon plus précise, puisque le mécanisme de soulèvement est bloqué dans une position donnée correspondant à un certain soulèvement du capot, l'ensemble constitué par le capot, ledit mécanisme et le piston peut être assimilé à une seule pièce rigide. Le dispositif d'amortissement doit permettre audit ensemble de se déplacer sous l'effet d'un choc piéton, dans un sens opposé à celui du soulèvement du capot de façon à accompagner ledit choc pour l'amortir. Pour la compréhension de l'invention et en particulier de la revendication 1, le mécanisme de soulèvement comprend une bielle et une patte de soulèvement.

Le vérin pyrotechnique possède donc un corps cylindrique creux dans lequel est placé le piston.

Le dispositif d'amortissement se situe donc dans le vérin pyrotechnique. Ceci privilégie un encombrement minimum du dispositif d'amortissement.

De façon caractéristique, le dispositif d'amortissement est constitué structurellement par le dispositif de blocage (voir ci-après). Autrement dit, les dispositifs de sécurité selon l'invention disposent d'un seul dispositif mécanique qui, selon la sollicitation exercée, peut, soit, bloquer le mécanisme de soulèvement, soit amortir l'ensemble "capot + mécanisme de soulèvement + piston".

De façon caractéristique, le corps creux présente une partie amont de faible diamètre et une partie aval de diamètre supérieur reliées entre elles par un canal divergent et le piston comporte une gorge périphérique délimitée partiellement par la paroi interne de ladite partie amont ; ladite gorge logeant un organe précontraint en appui contre ladite paroi interne. Ainsi, le piston est positionné dans le corps creux de sorte que la gorge se retrouve dans la partie amont dudit corps, ledit piston étant susceptible de coulisser dans ladite partie amont.

Préférentiellement, la gorge a une section en forme de U de façon à présenter deux parois latérales l'une en face de l'autre et parallèles entre elles.

Un organe précontraint est donc logé dans la gorge, en appui contre la paroi interne de la partie amont.

De cette manière, le retrait de la paroi interne de la partie amont provoquerait la détente dudit organe.

De façon préférentielle, l'organe précontraint est constitué par un jonc qui est une pièce annulaire ayant la forme d'une couronne munie d'une ouverture. Ainsi, une pression radiale uniformément répartie sur ladite pièce permet à celle-ci de se déformer élastiquement de manière à rapprocher l'une de l'autre, les deux extrémités qui délimitent ladite ouverture.

Selon une variante de réalisation de l'invention, le jonc a une section circulaire.

De façon avantageuse, le déclenchement du vérin fait coulisser le piston jusqu'à ce que la gorge arrive dans la partie aval du corps, provoquant alors la détente du jonc.

En l'absence de sollicitation particulière, le jonc qui s'est détendu, empêche le piston de se déplacer en sens inverse.

Préférentiellement, le matériau de la partie amont du corps est déformable pour permettre au piston, à la suite du choc d'un piéton, d'effectuer un déplacement en sens opposé, en entraînant avec lui le jonc qui pénètre à force dans ladite partie amont du corps qui se déforme. La longueur parcourue par le jonc dans la partie amont correspond à la distance d'amortissement.

Le dispositif de sécurité selon l'invention présente l'avantage de posséder une fonction d'amortissement bien maîtrisée grâce à des dispositifs mécaniques simples, parfaitement adaptés aux faibles volumes disponibles, octroyés par un véhicule automobile. De plus, cette fonction d'amortissement est adaptable à une configuration donnée par une simple modification structurelle des matériaux impliqués ou par simple changement de matériau puisque lesdits matériaux sont d'utilisation courante et ont des propriétés mécaniques parfaitement connues.

On donne ci-après une description détaillée d'un dispositif de sécurité selon l'invention en se référant aux figures 1 à 4.

La figure 1 est une vue en coupe longitudinale d'un dispositif de sécurité selon l'invention muni d'un dispositif d'amortissement impliquant un jonc et n'ayant pas encore fonctionné.

La figure 2 représente le dispositif de la figure 1, le dispositif d'amortissement ayant fonctionné.

La figure 3 est une vue agrandie en coupe axiale longitudinale d'un dispositif d'amortissement impliquant un jonc.

La figure 4 est une vue agrandie en coupe axiale longitudinale du dispositif de la figure 3, après impact d'un piéton sur le capot.

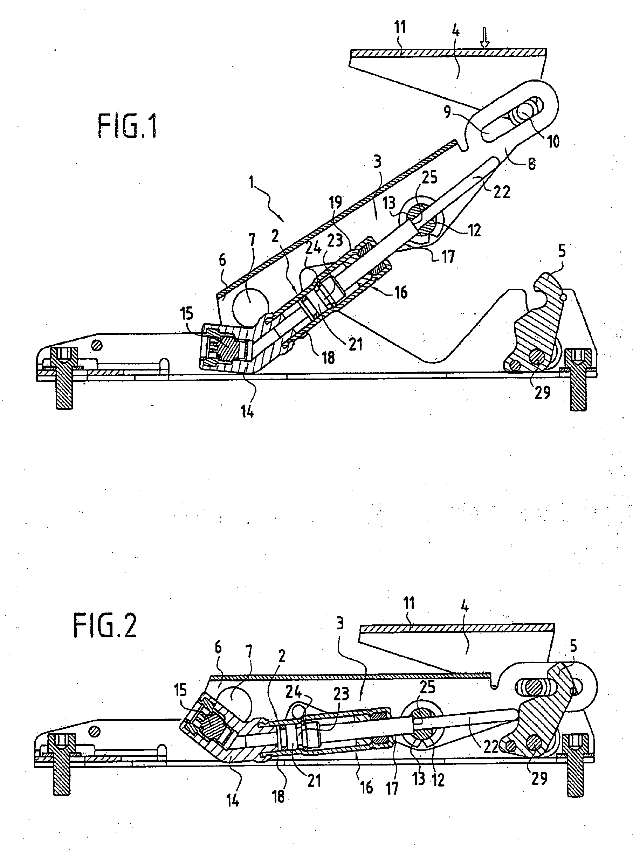

En se référant aux figures 1 et 2, un dispositif de sécurité 1 selon l'invention comprend un vérin pyrotechnique 2, une bielle 3, une patte de soulèvement 4 et un crochet de verrouillage 5. La bielle 3 a la forme d'une pièce allongée ayant une section variable en U, de sorte qu'elle présente deux faces parallèles entre elles. Ladite bielle 3 possède une partie amont 6 apte à pivoter autour d'un axe de rotation 7 traversant ses deux faces parallèles, et une partie aval 8 apte à se soulever lorsque la partie amont 6 pivote autour de son axe 7.

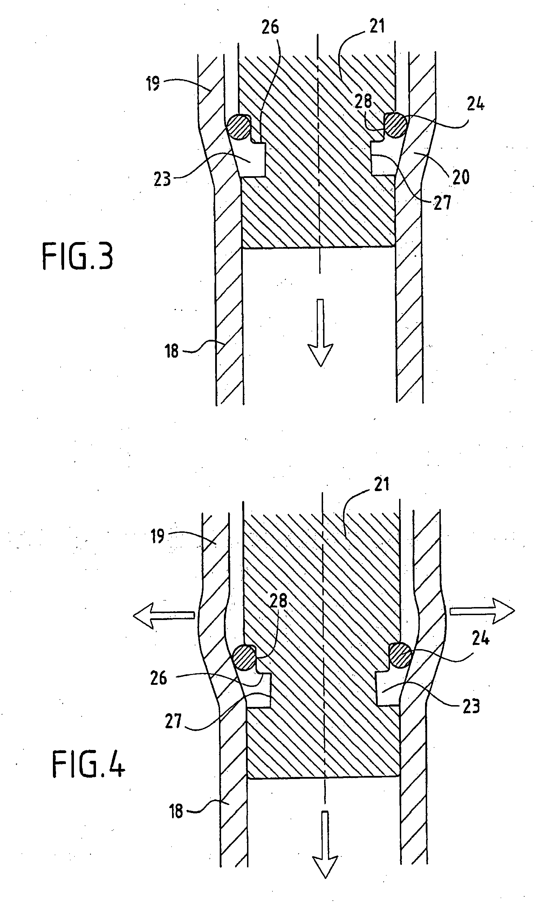

Ladite partie aval 8 comporte sur chacune de ces faces une ouverture allongée 9, chacune étant traversée par un axe de rotation 10 solidaire de la patte de soulèvement 4, ladite patte 4 étant elle-même solidaire du capot 11. La bielle 3 possède sur l'une de ses faces une protubérance 12 fixe, munie d'un méplat 13. Le vérin pyrotechnique 2 comprend une partie arrière coudée 14 dans laquelle est logée une charge pyrotechnique 15, et une partie avant sous la forme d'un corps cylindrique creux 16 droit dans lequel est logé un piston 17. Ledit corps creux 16 droit présente une partie amont 18 de faible diamètre et une partie aval 19 de diamètre supérieur reliées entre elles par un canal divergent 20, ladite partie amont 18 étant au contact de la partie arrière coudée 14. Le piston 17 est composé d'un corps élargi 21 prolongé par une tige 22 cylindrique comportant un épaulement 25. De cette manière, la tige 22 présente une partie élargie en contact avec le corps élargi 21 du piston 17 et une partie de plus faible diamètre. Ledit corps élargi 21 du piston 17 possède une gorge périphérique 23 et présente un diamètre externe légèrement inférieur au diamètre interne de la partie amont 18 du corps cylindrique creux 16 du vérin 2. Le piston 17 est placé dans le vérin 2 de sorte que son corps élargi 21 est logé dans la partie amont 18 du corps creux droit 16 et peut coulisser dans celle-ci de façon hermétique. Ainsi, la gorge périphérique 23 est partiellement délimitée par la paroi interne de ladite partie amont 18 du corps creux 16. Le vérin 2 est apte à pivoter en même temps que la bielle 3, autour d'un axe de rotation non représenté sur les figures, et qui est parallèle à l'axe de rotation 7 de ladite bielle 3. En se référant aux figures 3 et 4, la gorge 23 présente un épaulement 26 permettant de distinguer une partie 27 de faible diamètre correspondant à la partie la plus profonde de ladite gorge 23 et une partie 28 de diamètre supérieur. Un jonc 24 précontraint, de section circulaire, en appui contre la paroi interne de la partie amont 18 du corps cylindrique creux 16 est logé dans ladite gorge 23 au niveau de sa partie la plus profonde. Un système d'allumage électropyrotechnique est positionné à proximité de la charge pyrotechnique 15 pour assurer son initiation en combustion. Le crochet 5 est monté pivotant sur le véhicule et peut effectuer un mouvement rotatif autour d'un axe 29 de rotation.

Le mode de fonctionnement de ce dispositif de sécurité 1 selon l'invention s'effectue comme suit.

Une impulsion électrique déclenche le système d'allumage électropyrotechnique qui initie en combustion la charge pyrotechnique 15.

Les gaz délivrés déplacent le piston 17 qui, dans une première phase, déverrouille le dispositif de sécurité 1 en exerçant une poussée sur le crochet 5, et qui, dans une deuxième phase, vient en appui contre le méplat 13 de la protubérance 12 de la bielle 3 par l'intermédiaire de l'épaulement 25 de sa tige 22, pour provoquer la rotation de ladite bielle 3 autour de son axe 7. La rotation de ladite bielle 3 entraîne le soulèvement du capot 11 grâce à la patte de soulèvement 4 dont l'axe de rotation 10 peut se déplacer dans les ouvertures allongées 9 de la partie aval 8 de la bielle 3. Ainsi le piston 17 coulisse dans le corps cylindrique creux 16 droit jusqu'à ce que la gorge périphérique 23 arrive au niveau du canal divergent 20 et que le jonc 24 se soit détendu pour occuper la partie 28 de ladite gorge 23 la moins profonde. Dans cette position finale, correspondant à celle représentée sur les figures 1 et 3, le jonc 24 empêche tout déplacement du piston 17 en sens inverse, en l'absence d'une sollicitation externe. De cette manière, l'ensemble représenté par le capot 11, la patte de soulèvement 4 la bielle 3 et le piston 17 constitue une pièce rigide. Toute cette première phase correspond à une phase d'armement du dispositif 1 de sécurité.

En se référant à la figure 4, lors de l'impact d'un piéton sur le capot 11 suivant le sens matérialisé par la flèche de la figure 1, le choc ainsi généré se transmet jusqu'au piston 17, et son intensité est telle que ledit piston 17 va commencer à se déplacer en sens inverse, entraînant avec lui le jonc 24 qui s'est détendu. Ledit jonc 24, durant ce déplacement en sens opposé, pénètre à force dans la partie amont 18 de faible diamètre du corps cylindrique creux 16 qui se déforme. Cette phase de déformation du corps cylindrique creux 16 correspond à une phase d'amortissement du capot 11, car ledit capot 11 peut se déplacer sous l'effet de l'impact d'un piéton tout en étant freiné. En se référant à la figure 4, le déplacement du capot 11 s'arrête lorsque le dispositif de sécurité 1 se retrouve en position de réenclenchement. Pour ce mode de réalisation, le jonc 24 a joué le double rôle de dispositif de blocage et de dispositif d'amortissement.

## Revendications

1. Dispositif de sécurité (1) pour soulever le capot (11) d'un véhicule automobile en cas de collision avec un piéton, comprenant un vérin pyrotechnique (2) possédant un corps cylindrique creux (16) dans lequel est placé un piston (17) de poussée solidaire d'un mécanisme de soulèvement du capot (11) et apte à déployer ledit mécanisme qui est lui-même solidaire dudit capot (11), un dispositif de blocage destiné à bloquer ledit vérin (2) dans une position donnée, et un dispositif d'amortissement, situé dans ledit vérin pyrotechnique (2), mis en oeuvre lors d'un choc piéton sur le capot (11) qui s'est soulevé, de manière à ce que l'ensemble constitué par le capot (11), le mécanisme de soulèvement et le piston (17) puisse se déplacer sous l'impact du choc tout en étant freiné, **caractérisé en ce que** le corps creux (16) présente une partie amont (18) de faible diamètre et une partie aval (19) de diamètre supérieur reliées entre elles par un canal divergent (20), et **en ce que** le piston (17) comporte une gorge périphérique (23) délimitée partiellement par la paroi interne de ladite partie amont (18), ladite gorge (23) logeant un organe précontraint en appui contre ladite paroi interne.

2. Dispositif selon la revendication 1 **caractérisé en ce que** l'organe précontraint (24) est constitué par un jonc.

3. Dispositif selon la revendication 2 **caractérisé en ce que** le déclenchement du vérin (2) fait coulisser le piston (17) jusqu'à ce que la gorge (23) arrive dans la partie aval (19) du corps (16), provoquant alors la détente du jonc (24).

4. Dispositif selon la revendication 3 **caractérisé en ce que** le matériau de la partie amont (18) du corps (16) est déformable pour permettre au piston (17), suite au choc d'un piéton sur le capot, d'effectuer un déplacement en sens opposé, en entraînant avec lui le jonc (24) qui pénètre à force dans ladite partie amont (18) du corps (16) qui se déforme.

5. Dispositif selon la revendication 2 **caractérisé en ce que** le jonc (24) a une section circulaire.

## Patentansprüche

1. Sicherheitsvorrichtung (1) zum Heben der Haube (11) eines Kraftfahrzeugs bei einem Zusammenprall mit einem Fußgänger, die einen pyrotechnischen Zylinder (2) umfasst, der einen zylindrischen Hohlkörper (16) besitzt, in dem ein Schubkolben (17) platziert ist, der fest mit einem Hubmechanismus der Haube (11) verbunden und geeignet ist, den Mechanismus auszufahren, der selbst fest mit der Haube (11) verbunden ist, eine Blockierungsvorrichtung, die dazu bestimmt ist, den Zylinder (2) in einer gegebenen Position zu blockieren, und eine Dämpfvorrichtung, die sich in dem pyrotechnischen Zylinder (2) befindet, die bei einem Fußgängeraufprall auf der Haube (11), die sich angehoben hat, derart umgesetzt wird, dass sich die Einheit, die aus der Haube (11), dem Hubmechanismus und dem Kolben (17) besteht, unter dem Aufprall des Stoßes verlagern kann und gleichzeitig gebremst wird, **dadurch gekennzeichnet, dass** der Hohlkörper (16) einen stromaufwärtigen Teil (18) mit geringem Durchmesser aufweist, und einen stromabwärtigen Teil (19) mit größerem Durchmesser, die untereinander durch einen divergierenden Kanal (20) verbunden sind, und dass der Kolben (17) eine umfängliche Hohlkehle (23) umfasst, die teilweise durch die Innenwand des stromaufwärtigen Teils (18) abgegrenzt ist, wobei die Hohlkehle (23) ein vorgespanntes Organ in Auflage auf der Innenwand aufnimmt.

2. Vorrichtung nach Anspruch 1, **dadurch gekennzeichnet, dass** das vorgespannte Organ (24) aus einem Ring besteht.

3. Vorrichtung nach Anspruch 2, **dadurch gekennzeichnet, dass** das Auslösen des Zylinders (2) den Kolben (17) gleiten lässt, bis die Hohlkehle (23) in dem stromabwärtigen Teil (19) des Körpers (16) ankommt und das Entspannen des Rings (24) verursacht.

4. Vorrichtung nach Anspruch 3, **dadurch gekennzeichnet, dass** der Werkstoff des stromaufwärtigen Teils (18) des Körpers (16) verformbar ist, um es dem Kolben (17) im Anschluss an den Stoß eines Fußgängers auf der Haube zu erlauben, eine Bewegung in entgegengesetzte Richtung auszuführen, indem er den Ring (24) mitnimmt, der kraftbedingt in den stromabwärtigen Teil (18) des Körpers (16), der sich verformt, eindringt.

5. Vorrichtung nach Anspruch 2, **dadurch gekennzeichnet, dass** der Ring (24) einen kreisförmigen Querschnitt hat.

## Claims

1. A safety device (1) for raising the bonnet (11) of a motor vehicle in the event of a collision with a pedestrian, comprising a pyrotechnic actuator (2) possessing a hollow cylindrical body (16) containing a thrust piston (17) secured to a mechanism for raising the bonnet (11) and able to deploy the said mechanism which is itself secured to the said bonnet (11), a blocking device intended to block the said actuator (2) in a given position, and a shock-absorbing device, located within the said pyrotechnic actuator (2), employed when a pedestrian hits the bonnet (11) which has been raised, so that the assembly consisting of the bonnet (11), the raising mechanism and the piston (17) can move under the effect of the impact while at the same time being retarded, **characterized in that** the hollow body (16) exhibits a small-diameter upstream part (18) and a larger-diameter downstream part (19) which parts are connected to one another by a divergent passage (20), and **in that** the piston (17) comprises a peripheral groove (23) partially delimited by the internal wall of the said upstream part (18), the said groove (23) housing a prestressed member bearing against the said internal wall.

2. The device according to claim 1, **characterized in that** the prestressed member (24) consists of a snap ring.

3. The device according to claim 2, **characterized in that** initiation of the actuator (2) causes the piston (17) to slide until the groove (23) reaches the downstream part (19) of the body (16), thus causing the snap ring (24) to relax.

4. The device according to claim 3, **characterized in that** the material of the upstream part (18) of the body (16) is deformable so as to allow the piston (17), following an impact of a pedestrian with the bonnet, to move in the opposite direction, carrying with it the snap ring (24) which forcibly enters the said upstream part (18) of the body (16) which deforms.

5. The device according to claim 2, **characterized in that** the snap ring (24) has a circular cross section.
